## Europäisches Patentamt
## European Patent Office
## Office européen des brevets

(19)

(11) Veröffentlichungsnummer: **0 167 642**
**B1**

(12) **EUROPÄISCHE PATENTSCHRIFT**

(45) Veröffentlichungstag der Patentschrift:
**30.03.88**

(51) Int. Cl.⁴: **B 64 F 1/28,** B 67 D 5/01,
F 16 L 27/08

(21) Anmeldenummer: **84107765.4**

(22) Anmeldetag: **04.07.84**

(54) **Betankungsarm.**

(43) Veröffentlichungstag der Anmeldung:
**15.01.86 Patentblatt 86/3**

(45) Bekanntmachung des Hinweises auf die Patenterteilung:
**30.03.88 Patentblatt 88/13**

(84) Benannte Vertragsstaaten:
**BE DE FR GB IT NL**

(56) Entgegenhaltungen:
**EP - A - 0 020 267
DE - A - 2 809 349
DE - A - 3 017 575
FR - A - 832 832
FR - A - 2 373 009
US - A - 2 531 001**

(73) Patentinhaber: **von Meyerinck, Wolfgang, Dipl.-Ing.,
Daubringer Strasse 43, D-6304 Lollar (DE)**
Patentinhaber: **von Meyerinck, Dietz, Arnsburger
Strasse 14, D-6302 Lich 2 (DE)**

(72) Erfinder: **von Meyerinck, Wolfgang, Dipl.-Ing.,
Daubringer Strasse 43, D-6304 Lollar (DE)**
Erfinder: **von Meyerinck, Dietz, Arnsburger Strasse 14,
D-6302 Lich 2 (DE)**

(74) Vertreter: **Patentanwälte Dipl.-Ing. R. Schlee Dipl.-Ing.
A. Missling, Bismarckstrasse 43, D-6300 Giessen (DE)**

## Beschreibung

Die Erfindung betrifft einen Betankungsarm für den Anschluss an Versorgungsleitungen, insbesondere für die Tankwagen- und Flugzeugbetankung, mit einer Betankungskupplung für den Anschluss an die zu betankende Einrichtung, bestehend aus mehreren, hintereinandergeschalteten Rohrabschnitten, die über Drehgelenke mit einem Freiheitsgrad miteinander und mit der Versorgungsleitung verbunden sind, bei dem das erste Drehgelenk an der Versorgungsleitung anschliessbar ist und die zwei diesem folgenden, einem ersten bzw. zweiten Rohrstück zugeordneten Drehgelenke mit einer Führungseinrichtung verbunden sind, wobei das erste, zweite und dritte Drehgelenk waagerecht verlaufende Drehachsen aufweisen und wobei am letzten, mit der Führungseinrichtung verbundenen Rohrstück bzw. dessen Enddrehgelenk ein mindestens zwei Rohrstücke und zwei zugeordnete Drehgelenke mit zueinander rechtwinkliger Drehachse aufweisendes Kopfstück mit der Betankungskupplung angeschlossen ist, wie dies aus der FR-A-2 373 009 bekannt geworden ist.

Für die Betankung von Flugzeugen bzw. für die Betankung von Tankwagen aus einem Versorgungssystem ist es bekannt, den Anschluss in einem Schacht unterhalb oder seitlich der Fahrfläche anzuordnen und die Befüllung der Flugzeuge bzw. der Tankwagen mit Hilfe eines Schlauches vorzunehmen, der an der Versorgungsleitung angeschlossen ist. Bei der Verwendung von Schläuchen ist der Nenndurchmesser dieser Schläuche auf maximal 3'' begrenzt, und zwar aus dem Grunde, weil bei grösseren Nennweiten die Schläuche nicht mehr hantierbar sind. Darüberhinaus ist bei der Verwendung von Schläuchen der Nachteil gegeben, dass diese nur sehr schwer aus dem Schacht herauszuziehen und an die Tankkupplung anzuschliessen sind, und zwar zum einen wegen ihres hohen Gewichtes und zum anderen wegen erheblicher Spannungen des Schlauches. Des weiteren entstehen Beschädigungen beim Herausholen des Schlauches aus dem Schacht, weil dieser dann über die Kanten des Schachtes gezogen werden muss. Diese Schwierigkeiten beim Herausziehen bzw. beim Wiedereinlegen der Schläuche in den Betankungsschacht sind die Ursache dafür, dass diese häufig am Boden ausgebreitet bleiben und so die Gefahr besteht, dass diese überfahren werden.

Ein weiterer Verschleiss ist auch bei der Betankungskupplung gegeben, da diese ständig auf dem Boden liegt oder über diesen gezogen wird.

Die FR-A-2 373 009 weist eine Betankungseinrichtung auf, die aus mehreren über Drehgelenke verbundenen Rohrabschnitten zusammengesetzt ist, wobei die Rohrabschnitte untereinander über Lenker in Form einer Nürnberger Schere miteinander verbunden sind. Dieses Rohrleitungssystem soll dazu dienen, um bei der Entladung von Schiffen die durch die Wellenbewegung bedingte Relativverschiebung der beiden Endpunkte der Rohrleitung durch Längenveränderung der Rohrleitung auszugleichen. Es handelt sich hier also um eine Spezialkonstruktion, die schwierig zu handhaben ist und in der Regel mit einem Kran angehoben werden muss. Eine derartige Vorrichtung ist jedoch bereits wegen ihres grossen Gewichts nicht für die Betankung von Fahrzeugen, insbesondere für die Flugzeugbetankung einsetzbar, da hier im Gegensatz zur Schiffbetankung die durch das Rohrsystem auf die Anschlusskupplungen ausgeübten Momente von untergeordneter Bedeutung sind.

Aus der FR-PS 832 832 ist eine versenkbare Einrichtung für die Flugzeugbetankung bekannt, bei der Gegengewichte zum Gewichtsausgleich eingesetzt sind.

Der Erfindung liegt die Aufgabe zugrunde, einen Betankungsarm der eingangs genannten Art so auszubilden, dass dieser bei einfachster Handhabung und mühelos hantierbar und an die Tankkupplung anschliessbar ist, dass dieser mit an den Bedarf angepassten Nennweiten für ein schnelles Betanken ausgebildet ist, dass dieser praktisch verschleissfrei und wartungsarm ist und in einem Schacht versenkbar ist.

Diese Aufgabe wird mit den kennzeichnenden Merkmalen des Anspruches 1 gelöst.

Ein erfindungsgemäss ausgebildeter Betankungsarm besteht somit aus mindestens acht Rohrstücken, die mit an die geforderte Betankungsleistung angepassten Nennweiten ausgebildet sind und die untereinander über mindestens sieben Drehgelenke verbunden sind. Die ersren drei Drehgelenke, die im unmittelbaren Anschluss an die Versorgungsleitung hintereinanderliegend angeordnet sind, haben Drehachsen, die alle parallel zueinander liegen, und zwar senkrecht zur Ausziehrichtung des Betankungsarmes. Ist der Betankungsarm z.B. in einem Schacht angeordnet und muss zur Betankung aus diesem Schacht herausgehoben werden, so liegen die Drehachsen waagerecht. Das dritte Drehgelenk ist in seiner Bewegungsrichtung geführt und entspricht in seinem Verschiebeweg der Hubbewegung des Betankungsarmes. Diesem dritten Gelenk folgt dann ein viertes Drehgelenk, das mit seiner Drehachse senkrecht zur Drehachse des dritten Drehgelenkes angeordnet ist, so dass dieses im Falle, dass der Betankungsarm in einem Schacht angeordnet ist und lotrecht verfahren wird, in einer lotrechten Richtung liegt und somit eine Verschwenkung des Kopfes des Betankungsarmes in einer horizontalen Ebene gestattet. Dieses vierte Drehgelenk ist ein Drehgelenk des Kopfstücks mit der Tankkupplung, das wiederum aus fünf Rohrstücken besteht, die über vier Drehgelenke miteinander verbunden sind, die, wie auch die übrigen Gelenke, jeweils einen Freiheitsgrad aufweisen. Drei dieser Drehgelenke weisen Drehachsen auf, die parallel zueinander liegen. Die Drehachsen der zwei übrigen Gelenke sind zueinander parallel und liegen senkreckt zur Drehachse der übrigen Gelenke.

Das Gewicht des gesamten Betankungsarmes wird von einem Ausgleichsgewicht abgestützt, das zumindest das Gesamtgewicht des beweglichen Betankungsarmes kompensiert. Hierdurch wird erreicht, dass bei Entriegelung des Betankungsarmes dieser selbständig aus dem Schacht herausfährt und in einer Position verharrt, in der das Kopfstück frei über der Fahrbahn beweglich ist. Zum Einfahren des Betankungsarmes in den Schacht ist lediglich ein geringer Kraftaufwand erforderlich, der durch das Gewicht der Bedienungsperson leicht erbracht werden kann. In der eingefahrenen Stellung wird dann der Betankungsarm verriegelt. Es ist so möglich, eine hydraulisch oder elektrisch betätigte Ausfahreinrichtung einzusparen.

Gemäss einem weiteren Vorschlag der Erfindung kann darüber hinaus auch das Kopfstück gegenüber den übrigen Teilen des Auslegearmes mittels einer Balanceeinheit abgestützt werden, so dass das Kopfstück seine jeweilige Lage im Raum ohne oder allenfalls mit nur sehr geringen Kräften einhält. Diese Balanceeinrichtung kann z.B. aus einem Federpaket und einer Strebe bestehen, die an den beiden Rohrstücken angeschlossen ist, die mit dem ersten waagerechten Gelenk verbunden sind, das sich an das vierte Gelenk des Betankungsarmes anschliesst.

Weitere vorteilhafte Ausgestaltungen der Erfindung gehen aus den Unteransprüchen in Verbindung mit Zeichnung und Beschreibung hervor.

Ein Ausführungsbeispiel der Erfindung ist im folgenden anhand der Zeichnung näher beschrieben, in dieser zeigen:

Fig. 1 eine Seitenansicht eines erfindungsgemässen, in einem Schacht angeordneten Betankungsarmes und

Fig. 2 eine Draufsicht auf das in Fig. 1 gezeigte Ausführungsbeispiel.

Der insgesamt mit 1 bezeichnete Betankungsarm ist in einem Schacht 2 angeordnet, dessen Sohle mit 3 und dessen Oberkante mit 4 bezeichnet ist. An die von einem unterirdischen Tanklager kommende Versorgungsleitung 5 sind die in im wesentlichen lotrechte Richtung verschiebbaren Rohrstücke 6, 7 (erstes bzw. zweites Rohrstück) über ein erstes Drehgelenk 8 angeschlossen, dessen Drehachse waagerecht liegt. Die beiden Rohrstücke 6, 7 sind gleichfalls über ein zweites Drehgelenk 9 mit waagerecht liegender Drehachse verbunden.

Das am Ende des Rohrstückes 7 angeordnete dritte Drehgelenk 10, dessen Drehachse gleichfalls waagerecht liegt, ist in einer lotrecht liegenden Führungsschiene 11 verschiebbar angeordnet. Das dritte Drehgelenk 10 kann in etwa eine Hubbewegung ausführen, die der Höhe der Führungsschiene 11 entspricht. An dem dritten Drehgelenk ist ein bogenförmiges drittes Rohrstück 12 angeschlossen, dessen Ende mit einem vierten Drehgelenk 13 verbunden ist, dessen Drehachse senkrecht zur Drehachse des dritten Drehgelenks, d.h. lotrecht liegt. Dieses vierte Drehgelenk ist ein Drehgelenk eines insgesamt mit 14 bezeichnet Kopfstücks, das die Betankungskupplung 15 trägt. Diese Betankungskupplung ist in herkömmlicher Art und Weise ausgebildet und für den Anschluss an die Tankventile von Flugzeugen bzw. von Tankwagen vorgesehen.

Das Kopfstück 14 besteht aus fünf Rohrstücken, nämlich einem vierten (25), fünften (24), sechsten (18), siebten (17) und achten (16) Rohstück, die jeweils durch ein fünftes (26) sechstes (23), siebentes (21) und achtes (29) Drehgelenk miteinander verbunden sind. Zwischen dem fünften Rohrstück 24 und dem vierten Drehgelenk 13 ist das vierte Rohrstück 25 über das fünfte Drehgelenk 26 angeschlossen, wodurch der maximale Abstand der Betankungskupplung 15 zum Schacht 2 massgebend bestimmt wird. Das sechste Rohrstück 18 ist durch ein neuntes Drehgelenk 22 unterteilt. Dieses Drehgelenk erhöht die Höhenverschiebbarkeit der Betätigungskupplung um den Abstand der Gelenke 20, 22.

Die Ebene der Drehachse des achten Gelenks 20 liegt parallel zur Drehachse des neunten Gelenks 22. Das zwischen den Gelenken 20 und 22 liegende siebente Drehgelenk 21 weist eine Drehachse auf, die senkrecht zur Drehachse des achten Gelenks 20 liegt. Das die beiden Rohrstücke 18, 18' und 24 verbindende sechste Drehgelenk 23 liegt mit seiner Drehachse senkrecht zur Drehachse des vierten Drehgelenks 13. Durch diese spezielle Anordnung der Gelenke ist es möglich, die Betankungskupplung 15 in allen Ebenen im Raum auszurichten, ohne dass der Betankungsarm einem Moment unterworfen ist.

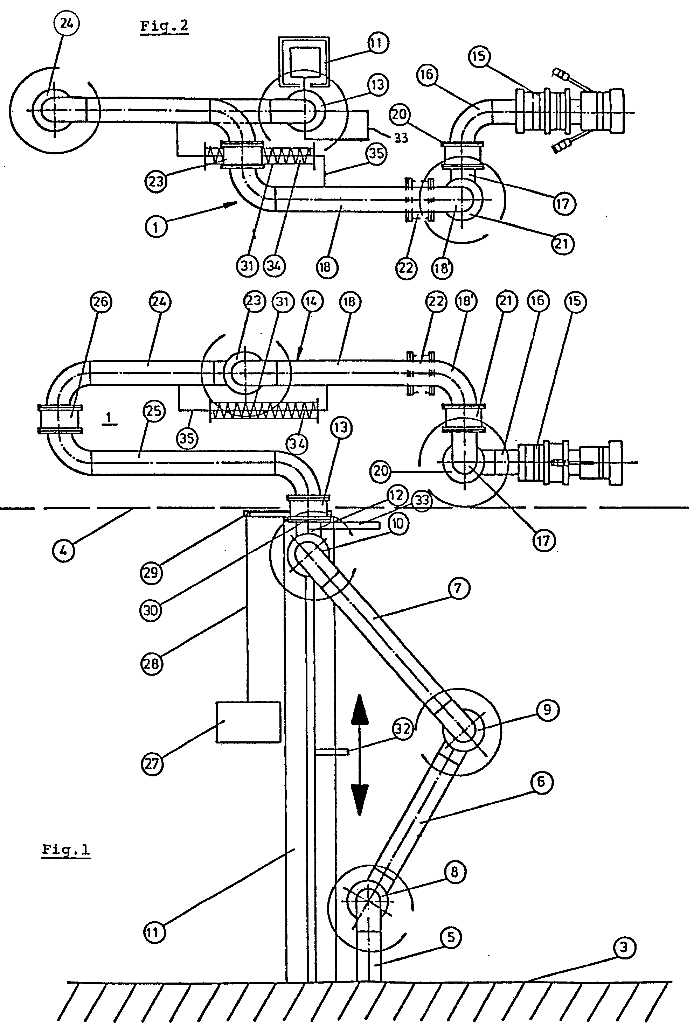

Im Schacht 2 ist ein Ausgleichsgewicht 27 angeordnet, das über einen Flaschenzug 28 mit Umlenkrollen 29 und 30 am Rohrstück 12 angreift. Das Gewicht 27 ist so bemessen, dass dieses etwas grösser als die Hälfte des Gewichtes des Betankungsarmes 1 ist, so dass der Betankungsarm 1 durch das Gewicht 27 immer in der ausgefahrenen, in Fig. 1 gezeigten Stellung gehalten ist. Das Gewicht ist jedoch nur um soviel grösser gewählt, dass nicht nur das Gewicht des Betankungsarmes 1 ausgeglichen wird, sondern auch mögliche vorkommende Reibung in der Führungsschiene 11, so dass der Betankungsarm bei Lösung einer nicht weiter dargestellten Arretierung mit Sicherheit in die ausgefahrene Stellung gelangt. Das Einfahren des Betankungsarmes in den Schacht wird nach entsprechender Einschwenkung des Kopfstückes allein durch das Gewicht der Bedienungsperson, die die Trittfläche 33 belastet, bewirkt. Im Schacht 2 wird dann der Betankungsarm mit einer Verriegelungseinrichtung 32 wieder verriegelt. Die Bedienung ist also durch eine einzige Person mühelos möglich, wobei auch die Hantierbarkeit des Betankungsarmes einschliesslich des Kopfstückes durch die Lage der Gelenke ohne weiteres gewährleistet ist und zusätzlich erreicht wird, dass die Betankungskupplung momentenfrei am Tankventil anschliessbar ist.

Zwischen den beiden Rohrstücken 18 und 24, die durch das Gelenk 23 verbunden sind, bei dem die Drehachse als erste Gelenkachse nach dem Gelenk 13 horizontal liegt, ist eine Balanceeinheit 31 eingeschaltet, die aus einem Federpaket 34 sowie einer Druckstrebe 35 besteht. Das Federpaket ist in seiner Vorspannung derart einstellbar, dass diese Balanceeinheit 31 das Gewicht des Kopfstückes 14 ausgleicht, so dass die Betankungskupplung 15 immer ihre Position im Raum einhält bzw. nur mit einer geringen Kraft verschiebbar und haltbar ist und somit der Betankungsarm den Tankadapter auch nicht mit seinem Gewicht belastet.

Ein Betankungsarm gemäss der Erfindung zeigt somit den Vorteil, dass dieser ohne Schlauchverbindungen auskommt, die leicht beschädigt werden können und eine mittlere Lebensdauer von einem bis zwei Jahren aufweisen. Der Betankungsarm ist praktisch verschleissfrei und wartungsarm, wobei sich die Wartung auf die Kontrolle der Betankungskupplung in grösseren Abständen beschränken kann. Darüberhinaus ist es auch möglich, den Betankungsarm mit Nennweiten über 3'' auszubilden, ohne dass dessen Hantierbarkeit beeinträchtigt wird. Hierdurch ist die Förderleistung erheblich zu steigern und die notwendige Tankzeit stark zu verringern. Des weiteren wird die Betankungssicherheit im Vergleich zu Tankschäuchen wesentlich erhöht, so dass nunmehr auch eine gefahrlose Betankung bei laufenden Motoren und Turbinen möglich ist. Durch die leichte Bedienbarkeit ist darüberhinaus auch sichergestellt, dass der Betankungsarm nach Gebrauch wieder in den Schacht eingefahren wird.

**Patentansprüche**

1. Betankungsarm für den Anschluss an Versorgungsleitungen, insbesondere für die Tankwagen- und Flugzeugbetankung, mit einer Betankungskupplung (15) für den Anschluss an die zu betankende Einrichtung, bestehend aus mehreren, hintereinandergeschalteten Rohrabschnitten (6, 7, 12, 25, 24, 18, 17, 16), die über Drehgelenke (8, 9, 10, 13, 26, 23, 21, 20) mit einem Freiheitsgrad miteinander und mit der Versorgungsleitung (5) verbunden sind, bei dem das erste Drehgelenk (8) an der Versorgungsleitung anschliessbar ist und die zwei diesem folgenden, einem ersten (6) bzw. zweiten (7) Rohrstück zugeordneten Drehgelenke (9, 10) mit einer Führungseinrichtung (11) verbunden sind, wobei das erste (8), zweite (9) und dritte (10) Drehgelenk waagerecht verlaufende Drehachsen aufweisen und wobei am letzten, mit der Führungseinrichtung verbundenen Rohrstück (7) bzw. dessen Enddrehgelenk (10) ein mindestens zwei Rohrstücke und zwei zugeordnete Drehgelenke mit zueinander rechtwinkliger Drehachse aufweisendes Kopfstück (14) mit der Betankungskupplung (15) angeschlossen ist, dadurch gekennzeichnet, dass das dritte Drehgelenk (10) bzw. das diesem Drehgelenk nachgeschaltete dritte Rohrstück (12) zum Einfahren in bzw. Ausfahren aus einem Schacht in einer vorgegebenen Bewegungsrichtung durch die Führungseinrichtung (11) geführt ist, dass am mit dem dritten Drehgelenk (10) verbundenen dritten Rohrstück (12) das Kopfstück (14) mit der Betankungskupplung (15) angeschlossen ist, dass das Kopfstück (14) aus einer aus fünf Rohrstücken, nämlich einem vierten (25), fünften (24), sechsten (18), siebten (17) und achten (16) Rohrstück gebildeten Rohrleitung besteht, die jeweils durch ein fünftes (26), sechstes (23), siebtes (21) und achtes (20) Drehgelenk miteinander verbunden sind, dass an dem der Betankungskupplung (15) gegenüberliegenden Ende des sich an den dritten Rohrabschnitt anschliessenden vierten Rohrabschnitts (25) ein viertes Drehgelenk (13) für den Anschluss an das dritte Rohrstück (12) angeordnet ist, dass von dem vierten bis achten Drehgelenk (13, 26, 23, 21, 20) das vierte (13), fünfte (26) und siebente (21) Drehgelenkt mit zueinander parallelen Drehachsen und das sechste (23) und achte (20) Drehgelenk mit senkrecht zu den Drehachsen dieser Drehgelenke (13, 26, 21) liegenden Drehachsen angeordnet sind und dass zwischen dem fünften Rohrstück (24) und dem diesem nachgeschalteten sechsten Rohrstück (18), die über das sechste Drehgelenk (23) miteinander verbunden sind, eine Balanceeinrichtung (31) eingeschaltet ist, die einerseits ein freies Verschwenken des Kopfstückes (14) des Betankungsarmes (1) gestattet, andererseits das Gewicht der dem fünften Rohrstück (24) nachgeschalteten Rohrstücke (18, 17, 16) der nachgeschalteten Drehgelenke (22, 21, 17) und der Betankungskupplung (15) aufnimmt.

2. Betankungsarm nach Anspruch 1, dadurch gekennzeichnet, dass am Betankungsarm (1) ein Gewicht (27) angreift, das in Ausfahrrichtung des Betankungsarmes (1) und damit in Richtung der Verschiebung des dritten Drehgelenks (10) wirkt und das zumindest das Gewicht des Betankungsarmes (1) kompensiert.

3. Betankungsarm nach Anspruch 1 oder 2, dadurch gekennzeichnet, dass der Betankungsarm eine Verriegelungsvorrichtung (32) für die Verriegelung in den Endstellungen aufweist.

4. Betankungsarm nach einem der Ansprüche 1 bis 3, dadurch gekennzeichnet, dass in dem der Balanceeinrichtung (31) nachgeschalteten Rohrstück (18) ein dieses unterteilendes neuntes Drehgelenk (22) eingefügt ist, das senkrecht zur Drehachse des sechsten Drehgelenks (23) liegt.

**Claims**

1. A refuelling arm for connecting to supply lines, more particularly for refuelling tankers and aircraft, comprising a refuelling coupling (15) for connecting to the device to be refuelled and comprising a number of successive pipe portions (6, 7, 12, 15, 24, 18, 17, 16), connected to one another and to the supply line by swivel joints (8, 9, 10, 13, 26, 23, 21, 20) having one degree of freedom, the first swivel joint (8) being connectable to the supply line and the two following swivel joints (9, 10), associated with a first pipe portion (6) and a second pipe portion (7) respectively, being connected to a guide device (11), the first (8) second (9) and third (10) swivel joint having horizontal axes of rotation and a headpiece (14) having at least two pipe portions and two associated swivel joints with axes of rotation at right angles to one another on the last pipe portion (7) connected to the guide device is connected to the refuelling coupling (15), characterised in that the third swivel joint (10) or the third pipe portion (12) connected behind it, for the purpose of insertion into or extension from a shaft, is guided in a preset direction of motion by the guide device (11), the headpiece (14) is connected to the refuelling coupling (15) on the third pipe portion (12) connected to the third swivel joint (10), the headpiece (14) comprises a pipe line made up of five pipe portions, i.e. a fourth (25), fifth (24), sixth (18), seventh (17) and eighth (16) pipe portion interconnected by a fifth (26), sixth (23), seventh (21) and eighth (20) swivel joint respectively, a fourth swivel joint (13) for connecting to the third pipe portion (12) is disposed on the end remote from the refuelling coupling (15) of the fourth pipe portion (25) adjacent the third pipe portion, out of the fourth to the eighth swivel joint (13, 26, 23, 21, 20) the fourth (13), fifth (26) and seventh (21) swivel joint have axes of rotation parallel to one another and the sixth (23) and eighth (20) swivel joint have axes at right angles to the axes of rotation of the swivel joints (13, 26, 21) and a balancing device (31) is disposed between the fifth pipe portion (24) and the sixth pipe portion (28) connected behind it via the sixth swivel joint (23), the balance device enabling the headpiece (14) of the refuelling arm (1) to pivot freely and also receiving the weight of the pipe portions (18, 17, 16) of the swivel joints (22, 21, 17) and the refuelling coupling (15) connected behind the fifth pipe portion (24).

2. A refuelling arm according to claim 1, characterised in that a weight (27) engages the refuelling arm (1) and acts in the extension direction of the refuelling arm (1) and consequently in the direction of motion of the third swivel joint (10) and at least compensates the weight of the refuelling arm (1).

3. A refuelling arm according to claim 1 or 2, characterised in that the arm has a locking device (32) for locking in the end positions.

4. A refuelling arm according to any of claims 1 to 3, characterised in that a ninth swivel joint (22) is inserted into and sub-divides the pipe portion (18) connected behind the balance device (31) and is disposed at right angles to the axes of rotation of the sixth swivel joint (23).

## Revendications

1. Bras de ravitaillement à raccorder à des conduites d'alimentation, en particulier pour le ravitaillement de véhicules citernes et d'avions, pourvu d'un accouplement d'approvisionnement (15) à raccorder au dispositif à approvisionner, constitué par plusieurs parties tubulaires (6, 7, 12, 25, 24, 18, 17, 16) montées en série, qui sont repliées l'une à l'autre et à la conduite d'alimentation (5) par des articulations (8, 9, 10, 13, 26, 23, 21, 20) ayant un degré de liberté, et dans lequel la première articulation (8) peut être raccordée à la conduite d'alimentation et les deux articulations (9, 10) consécutives, associées à une première (6) et à une deuxième (7) pièces tubulaires, sont reliées à un dispositif de guidage (11), la première (8), la deuxième (9) et la troisième (10) articulations ayant des axes de rotation dirigé dans le sens horizontal, et dans lequel une partie de tête (14), comportant au moins deux pièces tubulaires et deux articulations correspondantes avec deux axes de rotation disposés à angle droit l'un par rapport à l'autre, et portant l'accouplement d'approvisionnement, est reliée à la dernière pièce tubulaire (7) associée au dispositif de guidage ou à son articulation (10) d'extrémité, caractérisé en ce que la troisième articulation (10), ou la troisième pièce tubulaire (12) montée à la suite de cette articulation, est guidée dans sa direction de mouvement préfixée par le dispositif de guidage (11) de façon à entrer dans un puits ou gaine et pour en sortir; en ce que la partie de tête (14) portant l'accouplement d'approvisionnement est raccordée à la troisième pièce tubulaire (12) reliée à la troisième articulation (10); en ce que la partie de tête (14) est constituée par cinq pièces tubulaires, à savoir une quatrième (25), une cinquième (21), une sixième (18), une septième (17) et une huitième (16) pièces tubulaires, dont chacune est reliée à une autre respectivement par une cinquième (26), une sixième (23), une septième (21) et une huitième (20) articulations; en ce qu'à l'extrémité, située du côté de l'accouplement d'approvisionnement (15), de la quatrième partie tubulaire (25), laquelle se raccorde à la troisième partie tubulaire, une quatrième articulation (13) est disposée pour le raccordement à cette troisième pièce tubulaire (12); en ce que, parmi les quatrième à huitième articulations (13, 26, 23, 21, 20), la quatrième (13), la cinquième (26) et la septième (21) articulations sont disposées avec des axes de rotation parallèles les uns aux autres, tandis que la sixième (23) et la huitième (20) articulations sont disposées avec des axes de rotation perpendiculaires à ceux des articulations précitées; et en ce qu'entre la cinquième pièce (24) et la sixième pièce tubulaire (18), montée à la suite, lesquelles sont reliées l'une à l'autre par l'intermédiaire de la sixième articulation, il est inséré un dispositif d'équilibrage (31), qui d'une part permet un libre balayage de la partie de tête (14) du bras de ravitaillement (1) de d'autre part soutient le poids des pièces tubulaires (18, 17, 16), montées à la suite de la cinquième pièce tubulaire (24), des articulations montées à la suite (22, 21, 17), et de l'accouplement d'approvisionnement (15).

2. Bras de ravitaillement selon la revendication 1, caractérisé en ce qu'un poids (27) agit sur le bras de ravitaillement (1) dans le sens de son extraction et de ce fait dans la direction du déplacement de la troisième articulation (10) et compense au moins le poids du bras de ravitaillement.

3. Bras de ravitaillement selon la revendication 1 ou 2, caractérisé en ce qu'il comporte un dispositif de verrouillage (32) pour effectuer le verrouillage dans les positions d'extrémité.

4. Bras de ravitaillement selon l'une des revendications 1 à 3, caractérisé en ce qu'une neuvième articulation (22) est insérée dans la pièce tubulaire (18) montée à la suite du dispositif d'équilibrage (31), et partage cette pièce, cette neuvième articulation étant perpendiculaire à l'axe de rotation de la sixième articulation (23).

Fig.2

Fig.1

0 167 642